(19)

Europäisches
Patentamt

European
Patent Office

Office européen
des brevets

(11) **EP 1 891 602 B1**

(12) **EUROPÄISCHE PATENTSCHRIFT**

(45) Veröffentlichungstag und Bekanntmachung des
Hinweises auf die Patenterteilung:
**03.08.2011 Patentblatt 2011/31**

(21) Anmeldenummer: **06741040.7**

(22) Anmeldetag: **14.06.2006**

(51) Int Cl.:
*G06T 7/40* (2006.01)  *G06K 9/00* (2006.01)

(86) Internationale Anmeldenummer:
**PCT/AT2006/000244**

(87) Internationale Veröffentlichungsnummer:
**WO 2006/133473 (21.12.2006 Gazette 2006/51)**

(54) **VERFAHREN ZUM SEGMENTIEREN VON LEUKOZYTEN**

METHOD FOR THE SEGMENTATION OF LEUKOCYTES

PROCEDE DE SEGMENTATION DE LEUCOCYTES

(84) Benannte Vertragsstaaten:
**AT BE BG CH CY CZ DE DK EE ES FI FR GB GR
HU IE IS IT LI LT LU LV MC NL PL PT RO SE SI
SK TR**

(30) Priorität: **15.06.2005 AT 10102005**

(43) Veröffentlichungstag der Anmeldung:
**27.02.2008 Patentblatt 2008/09**

(73) Patentinhaber: **TissueGnostics GmbH
1020 Wien (AT)**

(72) Erfinder:
 • **RAMOSER, Herbert
  A-1020 Wien (AT)**
 • **ECKER, Rupert
  A-2231 Strasshof An Der Nordbahn (AT)**

(74) Vertreter: **Wildhack & Jellinek
Patentanwälte
Landstraßer Hauptstraße 50
1030 Wien (AT)**

(56) Entgegenhaltungen:
 • **RAMOSER H., LAURAIN, V., BISCHOF H., ECKER
  R.: "Leukocyte segmentation and classification
  in blood-smear images" PROCEEDINGS OF THE
  2005 IEEE ENGINEERING IN MEDICINE AND
  BIOLOGY 27TH ANNUAL CONFERENCE, 1.
  September 2005 (2005-09-01), - 4. September 2005
  (2005-09-04) Seiten 3371-3374, XP002393949**
 • **MONTSENY E ET AL: "A fuzzy approach to white
  blood cells segmentation in color bone marrow
  images" FUZZY SYSTEMS, 2004.
  PROCEEDINGS. 2004 IEEE INTERNATIONAL
  CONFERENCE ON BUDAPEST, HUNGARY 25-29
  JULY 2004, PISCATAWAY, NJ, USA,IEEE, Bd. 1,
  25. Juli 2004 (2004-07-25), Seiten 173-178,
  XP010755632 ISBN: 0-7803-8353-2**
 • **SINHA N ET AL: "Automation of differential blood
  count" IEEE TENCON 2003. CONFERENCE ON
  CONVERGENT TECHNOLOGIES FOR THE ASIA-
  PACIFIC REGION. BANGALORE, INDIA, OCT. 15
  - 17, 2003, IEEE REGION 10 ANNUAL
  CONFERENCE, NEW YORK, NY : IEEE, US, Bd.
  VOL. 4 OF 4. CONF. 18, 15. Oktober 2003
  (2003-10-15), Seiten 547-551, XP010686975 ISBN:
  0-7803-8162-9**

Anmerkung: Innerhalb von neun Monaten nach Bekanntmachung des Hinweises auf die Erteilung des europäischen
Patents im Europäischen Patentblatt kann jedermann nach Maßgabe der Ausführungsordnung beim Europäischen
Patentamt gegen dieses Patent Einspruch einlegen. Der Einspruch gilt erst als eingelegt, wenn die Einspruchsgebühr
entrichtet worden ist. (Art. 99(1) Europäisches Patentübereinkommen).

EP 1 891 602 B1

**Beschreibung**

n Die Erfindung betrifft ein Verfahren zum Segmentieren von gefärbten Leukozyten in digitalen Bilden von Blutausstrichen. Ein ähnliches Verfahren ist bereits bekannt aus E. Montseny et al, "A fuzzy approach to white blood cells segmentation in color bone marrow images", Proceedings of the IEEE International Conference on Fuzzy Systems, 2004, Vol. 1, Seiten 173-178.

Ziel der Erfindung ist die möglichst rasche und genaue Segmentierung und allenfalls die darauf folgende Klassifizierung von Leukozyten anhand von Bildern, die von gefärbten Blutausstrichen aufgenommen werden. Die Auswertung soll die Form und die Lage der Leukozyten sowie des Kerns der Leukozyten ohne großen Rechenaufwand möglichst naturgetreu wiedergeben, damit eine allenfalls nachfolgende Klassifizierung der Leukozyten rasch und ohne großen Aufwand möglich ist.

Erfindungsgemäß werden diese Ziele bei einem Verfahren der eingangs genannten Art durch die im Kennzeichen des Anspruches 1 angeführten Merkmale erreicht. Es zeigte sich, dass durch die vorgenommene Transformation und die nachfolgenden Wahrscheinlichkeitsermittlungen und Auswertung in Hinblick auf Wahrscheinlichkeitsprodukte mit wenig Rechenaufwand eine ausgesprochen exakte Abbildung der in dem Blutausstrich enthaltenen Leukozyten erreicht werden kann.

Bei einer bevorzugten Vorgangsweise sind die Merkmale des Anspruches 2 verwirklicht, damit wird der Kontrast der Leukozyten in dem betrachteten Bild erhöht.

Eine rechentechnische Vereinfachung des Ausverteverfahrens wird erreicht, wenn die Merkmale des Anspruches 3 verwirklicht sind. Unter einem Clustering versteht man eine Zusammenfassung von Bildpunkten mit wählbaren bzw. bestimmten ähnlichen Eigenschaften. Unter einem k-means clustering versteht man eine Algorithmus, bei dem eine gewünschte Anzahl k von Clustern und eine Funktion zur Bestimmung des Mittelpunktes eines Clusters bekannt ist. Der Algorithmus läuft folgendermaßen ab:

1. Initialisierung: (Zufälliges) Auswahl von k Clusterzentren
2. Zuordnung: Jedes Objekt wird dem ihm an nächsten liegenden Clusterzentrum zugeordnet
3. Neuberechnung: Es werden für jedes Cluster die Clusterzentren neu berechnet
4. Wiederholung: Falls sich nun die Zuordnung der Objekte ändert, weiter mit Schritt 2, ansonsten Abbruch

Es erfolgt ein Clustering von Daten in eine vorgegebene Anzahl von Gruppen ausgehend von vorgegebenen Startpunkten.

Die Erfindung betrifft ferner ein Computerprogrammprodukt gemäß Anspruch 7.

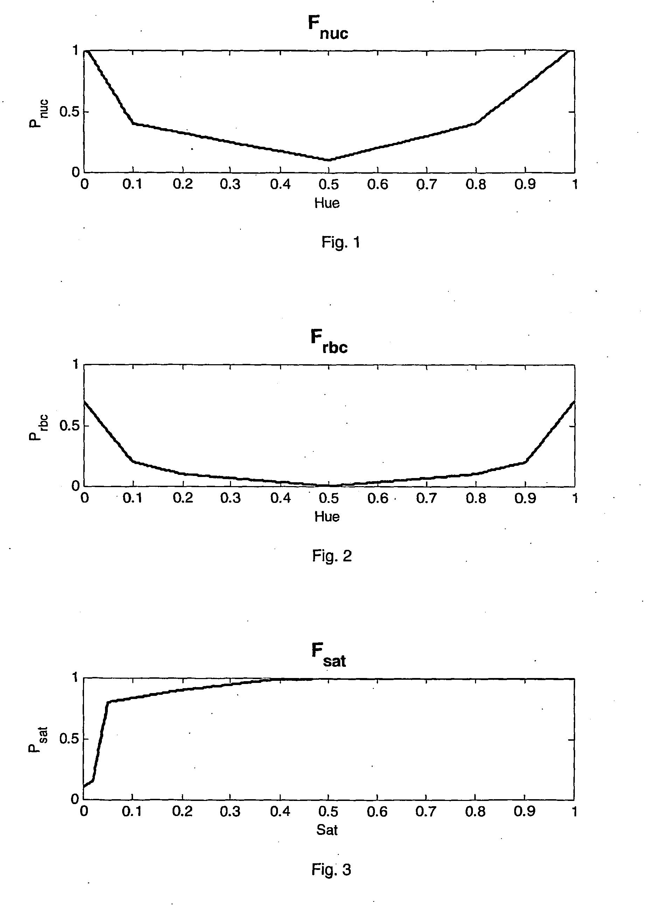

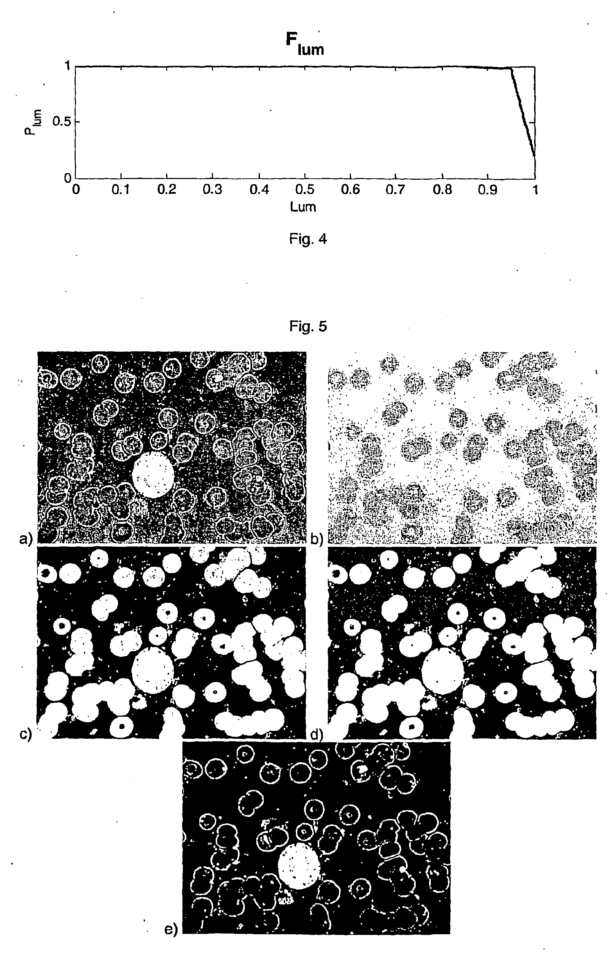

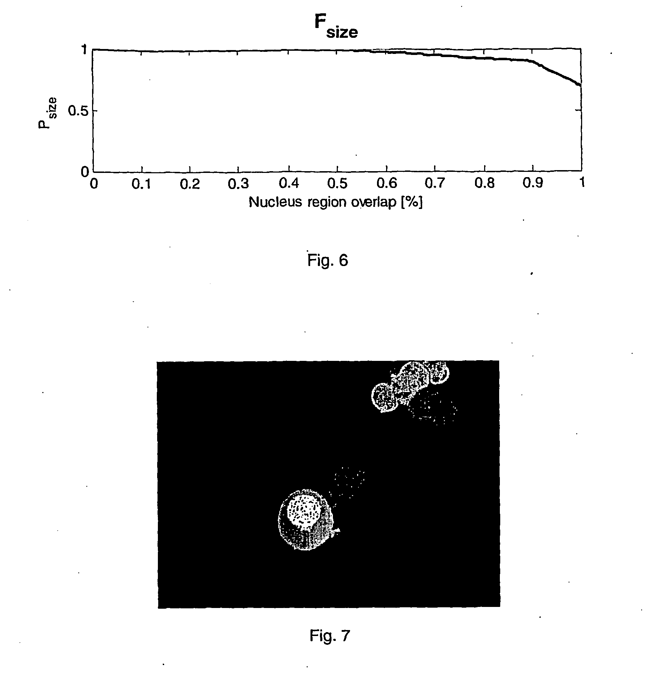

Fig. 1, 2, 3, 4 und 6 zeigen unterschiedliche Abbildungsfunktionen bzw. Wahrscheinlichkeitsverläufe, Fig. 5a, b, c, d und e zeigen verschiedene Wahrscheinlichkeitsbilder, die im Zuge der Durchführung des erfindungsgemäßen Verfahrens erhalten werden. Fig. 7 zeigt einen segmentierten Leukozyten.

Die Erfindung wird im folgenden anhand der Segmentierung von Leukozyten in Bildern von gefärbten Blutausstrichen beispielsweise beschrieben. Es ist durchaus möglich, auch in anderer Weise erhaltene Bilder von Leukozyten auszuwerten.

Bilder von gefärbten Blutausstrichen werden erhalten, indem diese Bilder mit einer Farbkamera aufgenommen werden, welche am Tubus eines Durchlichtmikroskops montiert ist.

Die Leukozyten liegen in gefärbter Form vor. Die Färbung des Leukozytenkerns ist verglichen mit der Färbung des Zytoplasmas beträchtlich kontrastiert, insbesondere dunkler.

Die Sättigung ($Sat(R,G,B)$) und die Helligkeit ($Lum(R,G,B)$) eines Pixels werden als Merkmale für die Charakterisierung der Zellkernpixel und der Hintergrundpixel herangezogen. Nachfolgend wird die Berechnung der Sättigung und der Helligkeit eines Pixels aus den RGB - Farbkomponenten gezeigt.

$$RGBmax = \max(R, G, B)$$

$$RGBmin = \min(R, G, B)$$

$$Sat(R,G,B) = \begin{cases} 0 & \text{,if } RGBmax(R,G,B) = 0 \\ \dfrac{RGBmax(R,G,B) - RGBmin(R,G,B)}{RGBmax(R,G,B)} & \text{,otherwise} \end{cases}$$

$$Lum(R,G,B) = \frac{RGBmax(R,G,B) + RGBmin(R,G,B)}{2}$$

Es werden drei Pixelklassen definiert: Erythrozyten (rote Blutkörperchen), Leukozyten bzw. Leukozytenkerne (weiße Blutkörperchen) und Bildhintergrund, wobei angenommen wird, dass die Hintergrundregion die größte Anzahl von Pixel in einem Bild ausmacht, gefolgt von den Erythrozyten und den Leukozyten. Jeder Pixel wird mit der Methode "k-means clustering" einer dieser drei Klassen zugeordnet. Liegen mehr als 90% aller Pixel in der Klasse Hintergrund, dann wird der Zuordnungsprozess wiederholt, um eine Fehlsegmentierung zu vermeiden. Die Vorgangsweise beim "k-means clustering" ist aus Bishop, C. M. Neural Networks for Pattern Recognition. Oxford, England: Oxford University Press, 1995. bekannt.

Die Bildhintergrundfarbe eines Blutausstriches erscheint in den aufgenommenen Farbbildern, z. B. durch eine nicht ideale Beleuchtung, einen nicht optimalen Weißabgleich der Farbkamera oder durch das Glas des Objektträgers, nicht ideal weiß. Wird eine multiplikative Farbmischung angenommen, so kann für jeden Pixel $C \in \{R,G,B\}$ im Bild mit den nachfolgend beschriebenen Operationen die Farbe für jedes neue Pixel

$C' \in \{R,G,B\}$ so transformiert werden, dass jeder Hintergrundpixel annähernd weiß erscheint.

$$C' = \begin{cases} 255 \cdot \min\left(\dfrac{C}{\overline{C}_{bg}}\right) & \text{if } \overline{C}_{bg} > 0 \text{ und } \min\left(\dfrac{C}{\overline{C}_{bg}}\right) \leq 1 \\ 255 & \text{if } \overline{C}_{bg} > 0 \text{ und } \min\left(\dfrac{C}{\overline{C}_{bg}}\right) > 1 \end{cases}$$

$\overline{C}_{bg} \in \{R,G,B\}$ ist die gemittelte Farbe des Bildhintergrundes. Bei $\overline{C}_{bg} = 0$ liegt unter der Voraussetzung einer multiplikativen Farbmischung ein schwarzes Bild vor.

Im Zuge einer Bildtransformation vom RGB-Farbraum in einen alternativen Farbraum wird zusätzlich zu Sättigung und Helligkeit der Farbton ermittelt. Der Farbton ($Hue(R,G,B)$) jedes Pixels wird in einen Kreis, der in sechs Sektoren unterteilt ist, wie folgt transformiert:

$$C_n = \frac{RGBmax(R,G,B) - C'}{RGBmax(R,G,B) - RGBmin(R,G,B)}, \quad C' \in \{R,G,B\}, \quad C_n \in \{R_n, G_n, B_n\}$$

Aus den Pixelwerten $C'$ (RGB) werden neue Pixelwerte $C_n$ ($R_n$, $G_n$, $B_n$) errechnet. (R .... Rotkanal, G .... Grünkanal, B .... Blaukanal)

```
if  R = RGBmax(R,G,B)
```

$$Hue(R,G,B) = \begin{cases} 5 + B_n & \text{if } G = RGBmin(R,G,B) \\ 1 - G_n & \text{otherwise} \end{cases}$$

```
else if  G = RGBmax(R,G,B)
```

$$Hue(R,G,B) = \begin{cases} 1 + R_n & \text{if } B = RGBmin(R,G,B) \\ 3 - B_n & \text{otherwise} \end{cases}$$

```
else
```

$$Hue(R,G,B) = \begin{cases} 3 + G_n & \text{if } R = RGBmin(R,G,B) \\ 5 - R_n & \text{otherwise} \end{cases}$$

```
end if
```
(Ende der end if Schleife und es folgt der nächste Schritt)

$$Hue(R,G,B) = \frac{Hue(R,G,B)}{6}$$

Die Leukozytenwahrscheinlichkeit wird für jeden Pixel über das Produkt des Wahrscheinlichkeitswertes für den Zellkernfarbton ($P_{nuc}$), und zumindest eines weiteren Wahrscheinlichkeitswertes, und zwar des Wahrscheinlichkeitswertes für den "nicht Erythrozytenfarbton" ($P_{rbc}$) und/oder für die Sättigung ($P_{sat}$) und/oder die Helligkeit ($P_{lum}$) berechnet. Die einzelnen Wahrscheinlichkeitswerte werden über heuristische, anhand von Testbildserien ermittelte Abbildungsfunktionen bestimmt. In den Fig. 1, 2, 3 und 4 sind entsprechend ermittelte Abbildungsfunktionen grafisch dargestellt. Die stückweise vorgegebenen linearen Abschnitte der Abbildungsfunktionen ermöglichen eine effiziente Interpolation oder die Anwendung von Verweistabellen im Zuge der Auswertung von Bildern. Zur Erhöhung der Auswertegenauigkeit kann das Produkt aller Wahrscheinlichkeitswerte ermittelt werden. Zumeist genügt das Wahrscheinlichkeitsprodukt des Zellkernfarbtones $P_{nuc}$ mit einem weiteren Wahrscheinlichkeitswert.
Die kombinierte Leukozytenwahrscheinlichkeit errechnet sich dann für jeden Pixel wie folgt:

$$P_{wbc}(R,G,B) = P_{nuc}(Hue(R,G,B))P_{rbc}(Hue(R,G,B))P_{sat}(Sat(R,G,B))P_{lum}(Lum(R,G,B))$$

Fig. 5a, b, c, d und e zeigen anhand eines Beispielbildes die einzelnen Wahrscheinlichkeitsbilder bzw. das kombinierte Wahrscheinlichkeitsbild. Fig. 5a zeigt ein Wahrscheinlichkeitsbild für den Zellkernfarbton, Fig. 5b ein Wahrscheinlichkeitsbild für den "Nicht-Erythrozytenfarbton", Fig. 5c ein Wahrscheinlichkeitsbild für die Sättigung, Fig. 5d ein Wahrscheinlichkeitsbild für die Helligkeit und Fig. 5e das erhaltene Wahrscheinlichkeitsbild für einen Leukozyten. Helle Pixel korrespondieren mit hohen Wahrscheinlichkeitswerten, dunkle Pixel mit niedrigen Wahrscheinlichkeitswerten.
Zur Verbesserung der Bildqualität kann auf das Wahrscheinlichkeitsbild entsprechend Fig. 5e die Methode Maximally Stable Extremal Regions (MSER) angewendet werden.
Ein MSER-Verfahren ist in J.Matas, O.Chum. M. Urban, T.Pajdla; Robust wide baseline stereo from maximally stable extremal regions; im International Journal of Computer Vision; vol. 22; no. 10; pp. 761-767; 2004 bzw. in J.Matas, O. Chum, M.Urban, T. Pajdla; Distinguished Regions for Wide-Baseline Stereo; report CTU-CMP-2001-33; Prague, Czech Republic: Center for Machine Perception, Czech Technical University, 2001.
Im Zuge eines MSER-Verfahrens wird ein Bild immer wieder in unterschiedliche Binärbilder umgesetzt, und zwar jedes Mal mit einem anderen Schwellwert, der kontinuierlich einen anderen Wert, z.B. zwischen 1 bis 254, annimmt.

In Fig. 5e ist deutlich der helle Leukozytenkern und das etwas geringere Helligkeit aufweisende Zytoplasma des Leukozyten erkennbar.

Für jede segmentierte Region R', d.h. für Bilder mit zusammenhängenden Bildpunkten mit ähnlichen Eigenschaften, betreffend Zellkernpixel, wird anschließend das Qualitätsmaß Q(R) berechnet:

```
if number of nucleus pixels in R < T_nucleus
```

$$Q(R) = 0 \qquad T_{nucleus} \text{ - vorgegebener Schellwert}$$

```
else

    morphological opening of R

    fill holes in R

    select largest region of R
```

$$Q(R) = Compactness(R)NucleusRatio(R)$$

```
end
```

Unter morphological opening versteht man eine Kombination der Operatoren Erosion mit anschließender Dilatation. Der Erosionsoperator bewirkt im Binärbild (jeder Bildpunkt hat entweder den Wert "0" oder "1"), die Verkleinerung aller Flächen mit dem Wert "1" um einen Rand der Breite eines Bildpunktes. Ein Bildpunkt mit dem Wert "0" behält seinen Wert, während ein Bildpunit mit dem Wert "1" nur dann seinen Wert behält, wenn alle Nachbarbildpunkte auch den Wert "1" besitzen. Der Dilatationsoperator bewirkt im Binärbild die Vergrößerung aller Flächen mit dem Wert "1" um einen Rand der Breite eines Bildpunktes. Die Operation fill holes wird auf ein Binärbild (jeder Bildpunkt hat entweder den Wert "0" oder "1") angewendet. Wird eine Fläche von Bildpunkten mit dem Wert "0" von einer Fläche von Bildpunkten mit dem Wert "1" umschlossen, so werden diese Bildpunkte mit dem Wert "0" durch Bildpunkte mit dem Wert "1" ersetzt.

Die Kompaktheit (Compactness) einer segmentierten Bildregion R errechnet sich folgendermaßen:

$$Compactness(R) = \frac{2\sqrt{\pi Area(R)}}{Perimeter(R)}$$

Das Verhältnis der Anzahl der Zellkernpixel *NucleusArea*(*R*) der Bildregion *R* zur Gesamtpixelanzahl der Bildregion *R Area*(*R*) gibt ein Wahrscheinlichkeitsmaß für die Zellkernfläche pro Gesamtfläche der Bildregion R entsprechend Fig. 6.

$$NucleusRatio(R) = F_{size}\left(\frac{NucleusArea(R)}{Area(R)}\right)$$

$F_{size}(x)$ ist die entsprechende Abbildungsfunktion. Der Verlauf von $F_{size}(x)$ ist in Fig. 6 dargestellt.

Die mit dem MSER-Verfahren ermittelte Qualität Q(R) der Regionen wird in einer Baumstruktur gespeichert. Um Leukozyten zu segmentieren, wird für jeden Ast des Baumes die Region mit dem höchsten Q(R) gewählt. Besitzt ein Ast mehrere Zweige, deren Mittelwert von Q(R) höher ist, so werden die Zweige als Segmentierung gewählt. In Fig. 7 sind jene Maximally Stable Extremal Regions (Bildregionen) dargestellt, die Zellkernpixel enthalten. Die Helligkeit ist proportional zur Anzahl der Nachkommen, d.h. zur Anzahl der Zweige eines Astes.

Nachdem auf diese Weise die Leukozyten in den Bildern segmentiert wurde, kann eine Klassifikation der Leukozyten in exakter Weise vorgenommen werden.

**EP 1 891 602 B1**

Diese Klassifikation kann eine Segmentierung von Zytoplasma und Zellkern umfassen, gefolgt von einer Erfassung der Textur und Formmerkmale und einem Vergleich der erfassten Merkmale mit vorgegebenen Vergleichswerten. In Abhängigkeit des erfolgten Vergleichs erfolgt sodann eine Zuordnung der segmentierten Leukozyten zu den verschiedenen Typen von Leukozyten.

**Patentansprüche**

1. Verfahren zum Segmentieren von gefärbten Leukozyten in digital Bildern von Blutausstrichen, **dadurch gekennzeichnet,**

   - **dass** die Pixel der von den Blutausstrichen aufgenommenen digitalen Bildern, vorzugsweise unter Anwendung eines Clustering, insbesondere eines "k-means clustering", entsprechend ihrer Farbwerte, insbesondere RGB-Farbwerte, einer von zumindest drei Pixelklassen, zumindest umfassend Erythrozyten, Leukozyten, einschließlich Zellkerne und Cytoplasma, und Bildhintergrund, zugeordnet werden,
   - **dass** die Farbwerte, insbesondere RGB-Farbwerte, aller Pixel eines Bildes der selben Transformation unterworfen werden, mit der die der Klasse des Bildhintergrundes zugeordneten Pixel zumindest annähernd weiß erscheinen, indem vorzugsweise die Farbwerte der einzelnen Pixel durch den für die Pixel des Hintergrundes ermittelten, gemittelten Farbwert dividiert werden,
   - **dass** eine Transformation des erhaltenen Farbbildes in einen alternativen Farbraum, der Farbton, Farbsättigung und Helligkeit getrennt repräsentiert, erfolgt und Farbton, Farbsättigung und Helligkeit aller Pixel ermittelt werden,
   - **dass** für jedes Pixel ein Wahrscheinlichkeitswert für seine Zugehörigkeit zu einem Leukozyten berechnet wird, welcher Wahrscheinlichkeitswert dem Produkt (Pwbc) des Wahrscheinlichkeitswertes (Pnnc) für den Leukozytenkernfarbton mit zumindest einem weiteren Wahrscheinlichkeitswert entspricht, wobei der zumindest eine weitere Wahrscheinlichkeitswert einer der folgenden Wahrscheinlichkeitswerte ist, und zwar ein Wahrscheinlichkeitswert (Prbc) für die Nichtzurechnung eines Pixels zu dem Erythrozytenfarbton oder ein dem Farbsättigungswert (Psat) jedes Pixels zugeordneter Wahrscheinlichkeitswert oder ein der Helligkeit jedes Pixels zugeordneter Wahrscheinlichkeitswert (Plum) ist,
   - **dass** diese Wahrscheinlichkeitswerte anhand von vorab ermittelten und festgelegten Zusammenhängen festgelegt werden, und
   - **dass** Pixel mit hohem Wert des Produktes der Wahrscheinlichkeitswerte als zu einem Leukozyten gehörend angesehen werden.

2. Verfahren nach Anspruch 1, **dadurch gekennzeichnet, dass** zum Hervorheben der Leukozytenpixel bzw. der Trennung vom Hintergrund auf die für die Pixel erhaltenen Wahrscheinlichkeitsprodukte bzw. auf das sich ergebende Wahrscheinlichkeitsbild ein Schwellwertverfahren angewendet wird, wobei zur Festlegung der Schwelle für jede segmentierte Region ein Qualitätsmaß Q(R) berechnet wird, indem insbesondere das Verhältnis der Anzahl der Leukozytenzellkernpixel innerhalb der segmentierten Region zur Gesamtanzahl der Pixel in dieser bekannten Region gebildet wird und der Schwellwert vom besten erhaltenen Qualitätsmaß eingesetzt wird.

3. Verfahren nach Anspruch 1 oder 2, **dadurch gekennzeichnet, dass** zur weiteren Segmentierung eines Leukozyten unter Berücksichtigung der Helligkeits-, Sättigungs- und Farbtonwerte des jeweiligen Pixels die Werte zwischen vorgegebenen Grenzen normiert werden und unter Anwendung eines Clusterings, vorzugsweise eines "k-means clusterings", gruppiert werden.

4. Verfahren nach einem der Ansprüche 1 bis 3, **dadurch gekennzeichnet, dass** die Formmerkmale und Formparameter der segmentierten Leukozyten ermittelt und in Abhängigkeit dieser Merkmale und Parameter die segmentierten Leukozyten den unterschiedlichen Leukozytentypen zugeordnet werden.

5. Verfahren nach einem der Ansprüche 1 bis 4, **dadurch gekennzeichnet, dass** die für die Berechnung des Wahrscheinlichkeitswertes der Pixel herangezogenen Wahrscheinlichkeitswerte über heuristische, insbesondere anhand von Testbildserien bzw. Kalibrationen ermittelte, Abbildungsfunktionen bestimmt werden.

6. Verfahren nach Anspruch 5, **dadurch gekennzeichnet, dass** die Abbildungsfunktionen bereichsweise mit linearen Abschnitten ausgebildet wurden.

7. Computerprogrammprodukt mit Programmcode-Mitteln, die auf einem computerlesbaren Datenträger gespeichert

6

sind, um das Verfahren nach jedem beliebigen der Ansprüche 1 bis 6 durchzuführen, wenn das Programmprodukt auf einem Computer ausgeführt wird.

**Claims**

1. The invention concerns a process to segment stained leukocytes in blood smears, **characterized by** the facts,

   - that the pixels of the recorded digital images of blood smears are assigned to one out of at least three pixel classes, leastwise comprising erythrocytes, leukocyte nuclei (including cytoplasm) and the image background, which assignment is done according to their colour values, in particular RGB colour values, preferably by using a clustering method, in particular a "k-means clustering".
   - that the colour values, particularly, RGB colour values of all pixels of the image can be subjected to the same transformation, which makes the background associated pixels to appear at least nearly white, so that preferably the colour value of each pixel is divided by the mean colour value ascertained for each pixel of the background,
   - that a transformation of the resulting colour image into an alternative colour space is performed, representing colour hue, colour saturation and colour intensity separately, whereby colour hue, colour saturation and colour intensity of all pixels are determined,
   - that for each pixel a probability value is calculated regarding its affiliation to a leukocyte, such probability value being the product (Pwbc) of the probability value (Pnnc) for the leukocyte's nuclear colouring and at least one further probability value, whereas this at least one further probability value is one of the following probability values, a probability value (Prbc) for the unaccountability of a pixel to the erythrocytes colour hue or a probability value based on the colour saturation value (Psat) of each pixel or a probability value reflecting the colour intensity value or brightness of each pixel (Plum),
   - that these probability values are defined by correlations investigated and set front-up, and
   - that pixels with high values of the product of the probability values are considered to belong to a leukocyte.

2. A process as claimed in claim 1, further **characterized by** the application of a threshold onto the product of probabilities obtained from pixels or onto the resulting probability picture, whereby for each segmented region a quality measure Q(R) has to be calculated, in which for determination of such threshold, particularly the ratio of the number of pixels of leukocyte-cell nuclei within the segmented region to the total number of pixels that form in this known region is formed and the threshold value from the best quality measure obtained, will be used.

3. A process as claimed in claim 1 or 2, further **characterized by** the fact that for further segmentation of a leukocyte, under consideration of the brightness-, saturation- and hue-values of each pixel, the values are normalized between predetermined limits and are grouped under application of a clustering method, preferably a "k-means clustering".

4. A process as claimed in one of the claims 1 to 3, further **characterized by** determination of shape features and shape parameters of the segmented leukocytes, and based on which features and parameters segmented leukocytes are assigned to the different classes of leukocytes.

5. A process as claimed in one of the claims 1 to 4, wherein the probability values used to calculate the probability value of the pixels, are determined by heuristic mapping functions, which functions in particular take advantage of series of fixed images or calibrations.

6. A process as claimed in claim 5, further **characterized by** the fact that the mapping functions contain linear sections.

7. Computer program product with program code means stored on a computer-readable medium to perform the process under any of the claims 1 to 6, when the program product runs on a computer.

**Revendications**

1. Une procédure pour la ségmentation de leucocytes colorés dans des frottis sanguins, **caractérisé par** les faits.

   - que les pixels des images digitales acquises des frottis sanguins sont attribués à une d'au moins trois classes de pixels, comprenant au moins erythrocytes, noyaux leucocytaires (y compris le cytoplasme) et fond de l'image, en préférence par utilisation d'un clustering, en particulier un «k-means clustering» selon leurs valeurs de couleurs, en particulier selon les valeurs RGB,

- que les valeurs de couleurs, en particulier les valeurs RGB de tous les pixels de l'image sont soumises à la même transformation, avec laquelle les pixels attribués à la classe du fond d'image apparaissent au moins approximativement blancs, en divisant en préférence les valeurs de couleurs des pixels individuels par la valeur moyenne de couleurs déterminée pour les pixels du fond de l'image,

- qu'une transformation de l'image en couleur obtenu en un espace colorimétrique alternatif représentant le coloris, la saturation et l'intensité des couleurs résulte, et que le coloris, la saturation et l'intensité des couleurs de tous le pixels est déterminé,

- que pour chaque pixel une valeur de probabilité pour son appartenance à un leucocyte est calculée, cette valeur de probabilité étant correspondante au produit (Pwbc) de la valeur de probabilité (Pnnc) pour le coloris du noyau leucocytaire avec au moins une autre valeur de probabilité, cette autre valeur de probabilité étant une des valeurs de probabilité suivantes, à savoir une valeur de probabilité (Prbc) pour la non-attribution au coloris erythrocytaire ou une valeur de probabilité attribuée à la valeur de la saturation de chaque pixel, ou une valeur de probabilité attribuée à la valeur d'intensité, respectivement la clarté, de chaque pixel (Plum),

- que ces valeurs de probabilité sont définies à l'aide de relations déterminées et définies à l'avance, et que

- et que des pixels avec une haute valeur du produit des valeurs de probabilité sont considérés comme appartenant à un leucocyte.

2. Un processus, d'après la revendication 1 ou 2, **caractérisé par le fait qu'**une procédure de seuillage est appliquée aux valeurs de probabilité obtenus pour les pixels, respectivement pour l'image de probabilité engendré, pour laquelle une mesure de qualité Q(R) est calculée pour chaque région segmentée pour la définition du seuillage, en composant la proportion du nombre des pixels du noyau leucocytaire dans la région segmentée envers le nombre total de pixels dans cette région connue et en introduisant le seuillage de la meilleure mesure de qualité obtenue,

3. Un processus, d'après la revendication 1 ou 2, **caractérisé par le fait que**, pour la segmentation ultérieure d'un leucocyte sous considération des valeurs de clarté, saturation et coloris du pixel respectif, le valeurs sont normés entre des limites fixées et groupées avec l'utilisation d'un clustering, en préférence d'un clustering "k-means clustering".

4. Un processus, d'après une des revendications 1 à 3, **caractérisé par le fait que** les critères et paramètres de forme des leucocytes segmentés sont déterminés et les leucocytes segmentés sont attribués aux différentes types de leucocytes en dépendance de ces critères et paramètres.

5. Un processus, d'après une des revendications 1 à 4, **caractérisé par le fait que** les valeurs de probabilité utilisés pour le calcul de la valeur de probabilité des pixels sont déterminés par des fonctions de transformation heuristiques, établis notamment par des séries d'images fixes, respectivement par des calibrations..

6. Un processus, d'après une la revendication 5, **caractérisé par le fait que** les fonctions de transformation ont été développés par domaines avec des sections linéaires.

7. Produit de logiciel d'ordinateur avec des codes de programmes qui sont stockés sur un support informatique, pour exécuter le processus au choix selon chacune des revendications 1 à 6, si le produit de programme est exécuté sur un ordinateur.

Fig. 1

Fig. 2

Fig. 3

**F$_{lum}$**

Fig. 4

Fig. 5

a)

b)

c)

d)

e)

Fig. 6

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **E. Montseny et al.** A fuzzy approach to white blood cells segmentation in color bone marrow images. *Proceedings of the IEEE International Conference on Fuzzy Systems,* 2004, vol. 1, 173-178
- **Bishop, C. M.** Neural Networks for Pattern Recognition. Oxford University Press, 1995

- **J.Matas ; O.Chum. M. Urban ; T.Pajdla.** Robust wide baseline stereo from maximally stable extremal regions. *International Journal of Computer Vision,* 2004, vol. 22 (10), 761-767
- **J.Matas ; O. Chum ; M.Urban ; T. Pajdla.** Distinguished Regions for Wide-Baseline Stereo; report CTU-CMP-2001-33. Center for Machine Perception, 2001